# EUROPEAN PATENT APPLICATION

(11) **EP 4 592 190 A2**
(43) Date of publication of application: **30.07.2025**
(21) Application number: 25181029.7
(22) Date of filing: 19.06.2017
(51) Int. Cl.: B64D 33/04

(54) **EXHAUST ASSEMBLY WITH VORTEX GENERATOR**

(62) Divisional of application: 17461548.4
(71) Applicant: General Electric Company Polska sp. z o.o., 02-256 Warszawa (PL)
(72) Inventor: IGLEWSKI, Tomasz, 02-256 Warszawa (PL)
(74) Representative: Patpol Kancelaria Patentowa Sp. z o.o.

(57) **Abstract**

The invention relates to an exhaust assembly (30) for a turbine engine, turbine engine and method of exhausting combustion gas. The exhaust assembly (30) comprising an exhaust conduit comprising a reverse flow portion, said reverse flow portion (44) defining a turn (46) with an interior (48), wherein the reverse flow portion (44) comprises an exhaust stub (32,132) extending from an exhaust collector (38,138) to an exhaust outlet (36,136) defining the exhaust conduit (47) and forming the turn (46,146), characterized in that it further comprises snorkels (168) being small pipes, placed into the exhaust stubs (132) downstream of where the exhaust stub (132) couples to the exhaust collector (138), the snorkel (168) connecting an anti-ice scoop (160) to a conduit (166) of the anti-ice system (164).

## Description

### BACKGROUND OF THE INVENTION

Contemporary turbo-prop engine aircraft can include one or more propellers attached to engines of the aircraft. Exhaust gases generated within the engines can be directed outward via an exhaust assembly. The direction in which exhaust gases exit the exhaust assembly can provide additional thrust to that provided by the propellers.

Exhaust gases can make an almost 180 degree turn in direction when exiting the exhaust assembly. The turn can include a low radius before discharged to ambient air. Separation within the exhaust gases can reduce overall exhaust system and engine performance. Minimizing the separation is beneficial for improved performance.

The document FR 871408 concerns a known de-icing structure. In a manner known per se, to heat the elements considered of the hood, heated or hot gases are used, which are directed along these elements so that they lick, first, the elements placed closest to the longitudinal axis of the hood, then the elements located at a greater distance from this axis, to then escape, preferably by passing through the exhaust orifices affecting the shape of a nozzle, substantially in the direction of flow of the outside air, into this outside air. However this know system appears to be more of an "open" system where gases are collected, distributed through wing/surface cavities, and then likely vented. This approach might be less efficient for the concentrated heating required for a relatively small but critical area like an engine inlet.

The document GB 2314887 discloses a nacelle having a porous structure and which is provided with laminar flow control and contamination protection. In region B suction through a composite layer is achieved by evacuating a chamber adjacent the inner surface of the nacelle to provide laminar flow control. At the leading edge of the nacelle a permeable sintered metal sheet is attached to an inner surface of the composite layer to control the flow of a contamination protection liquid over the leading edge of the nacelle. The liquid is contained in a chamber adjacent the sintered metal sheet which is defined by a backing sheet which has a series of depressions therein. Hot air fed through a perforated pipe, impinges upon the backing sheet and the depressions transmit heat to the sintered metal sheet The sintered metal sheet has good thermal conductivity and in turn heats the porous composite layer 24 to prevent the formation of ice thereon.

However said known anti-ice system can be less effective due to the fact that compressor bleed air is air that would otherwise participate in the combustion process or generate thrust. Tapping this air might result in a performance penalty for the engine (reduced thrust, increased fuel consumption). Moreover bleed air systems require robust ducting, valves capable of handling high pressures and temperatures, and precise control systems, which can add weight and complexity.

### BRIEF DESCRIPTION OF THE INVENTION

The present invention strives to avoid the various disadvantages mentioned above. The present invention is defined by the appended claims. Advantageous embodiments are subject to the dependent claims.

In one aspect, the present disclosure relates to an exhaust assembly for a turbine engine comprising an exhaust conduit comprising a reverse flow portion, said reverse flow portion defining a turn with an interior, wherein the reverse flow portion comprises an exhaust stub extending from an exhaust collector to an exhaust outlet defining the exhaust conduit and forming the turn, characterized in that it further comprises snorkels being small pipes, placed into the exhaust stubs downstream of where the exhaust stub couples to the exhaust collector, the snorkel connecting an anti-ice scoop to a conduit of the anti-ice system.

The anti-ice scoop is oriented with respect to a flow of combustion gases so that a flow of combustion gases can enter the anti-ice scoop.

The orientation of the anti-ice scoop allows for the combustion gases to discharge into the exhaust stream .

Advantageously, the anti-ice scoop can be a vortex generator.
In another aspect, the present disclosure relates to a turbine engine having a turbine section, a compressor section, and a combustor, characterized in that the turbine engine comprises:
an exhaust assembly coupled to the turbine section, and comprising a reverse flow portion, said reverse flow portion defining a turn with an interior, wherein the reverse flow portion comprises an exhaust stub extending from an exhaust collector to an exhaust outlet defining the exhaust conduit and forming the turn, characterized in that it further comprises snorkels being small pipes, placed into the exhaust stubs downstream of where the exhaust stub couples to the exhaust collector, the snorkel connecting an anti-ice scoop to a conduit of the anti-ice system.

Yet, in another aspect, the present disclosure relates to a method of exhausting combustion gas from a turbine engine, the method comprising reversing a flow of combustion gas exiting a turbine of the engine, and generating a vortex in the flow of combustion gas during the reversing. The method further includes scooping a portion of the combustion gas into an anti-ice scoop and circulating the combustion gas around an inlet.

### BRIEF DESCRIPTION OF THE DRAWINGS

In the drawings:
FIG. 1 is a schematic view of an aircraft with a turboprop engine including an exhaust assembly.
FIG. 2 is an enlarged view of the exhaust assembly from FIG. 1 with an exhaust collector.
FIG. 3 is a perspective view of the exhaust collector from FIG. 2 with a vortex generator.
FIG. 4 is a perspective view of exemplary vortex generators in accordance with various aspects described herein.
FIG. 5A is a top view of an exhaust flow path for a prior art exhaust assembly for the aircraft of FIG. 1.
FIG. 5B is a top view of an exhaust flow path for the exhaust assembly of FIG. 1 according to aspects of the disclosure described herein.
FIG. 6 is a perspective view of an inlet for the turboprop engine of FIG. 1 according to another aspect of the exhaust assembly described herein.

### DESCRIPTION OF EMBODIMENTS OF THE INVENTION

The described embodiments of the present disclosure are directed to an exhaust assembly for a turbine engine. For purposes of illustration, the present disclosure will be described with respect to a turboprop engine for an aircraft. It will be understood, however, that the disclosure is not so limited and may have general applicability in other aircraft engines as well as in non-aircraft applications, such as other mobile applications and non-mobile industrial, commercial, and residential applications.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary. In addition, "a set" as used herein can include any number of a particular element, including only one.

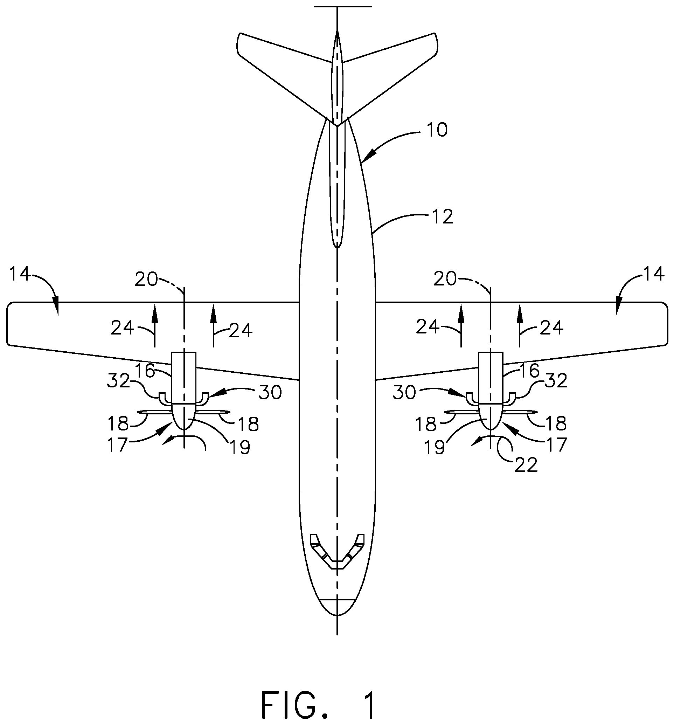

FIG. 1 depicts an aircraft 10 having a fuselage 12 and wings 14 extending outward from the fuselage 12. The aircraft 10 can include at least one engine assembly such as a turbo-prop aircraft engine 16 coupled to the aircraft 10, shown as a set of engines 16 coupled with the opposing wings 14. The engine 16 can include a set of propeller assemblies 17 coupled with the engine 16, and including propeller blades 18 and a rotatable hub assembly 19. The engine 16 can drive the propeller assembly 17 about a rotational axis 20 in a direction indicated by the arrow 22. The propeller blades 18 can further be configured or angled relative to the propeller assembly rotational axis 20 such that the rotation 22 of the propeller blades 18 generates thrust (illustrated as arrow 24) for the aircraft 10. An exhaust assembly 30 having a set of exhaust stubs 32 can extend outward from the engine 16 to direct exhaust gases away from the engine 16 (or any heat-sensitive components on the fuselage 12 or wings 14) in addition to generating additional thrust for the aircraft 10.

While an aircraft 10 having two turbo-prop engines 16 has been illustrated, embodiments of the disclosure can include any number of engines 16, propeller assemblies 17, or propeller blades 18, or any placement of the engine 16, assemblies 17, or blades 18 relative to the aircraft. Embodiments of the disclosure can further be applied to different aircraft engine 16 types, including, but not limited to, piston-based combustion engines, or electrically-driven engines. Additionally, the rotation 22 of the propeller assemblies 17 or propeller blades 18 is provided for understanding of the embodiments of the disclosure. Embodiments of the disclosure can include alternative directions of rotation 22 of the propeller assemblies 17 or propeller blades 18, or embodiments wherein a set of engines 16 rotate propeller blades 18 in the same or opposing directions.

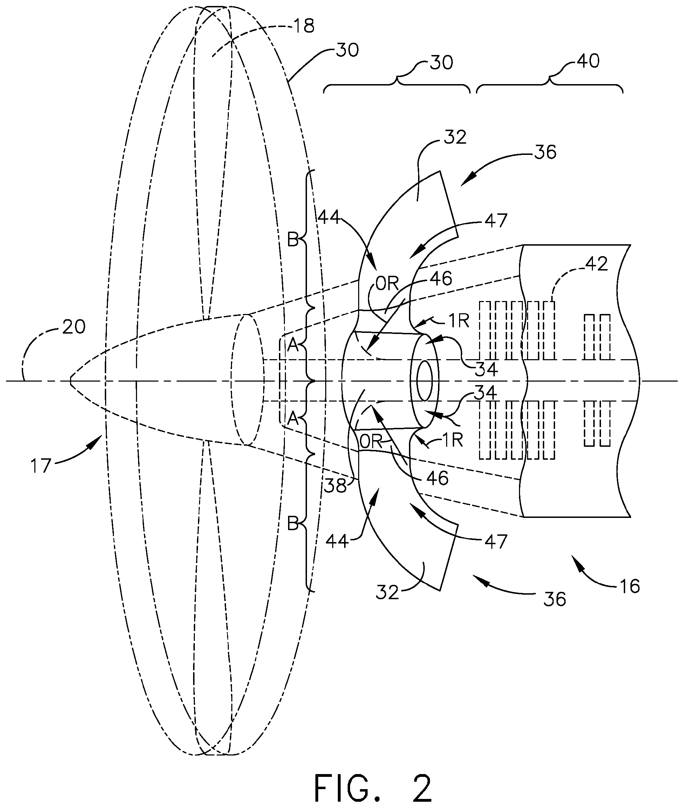

FIG. 2 is an enlarged view of the propeller assembly 17 and a portion of the engine 16 with the exhaust assembly 30 illustrated in further detail. The propeller assembly 17 and engine 16 are shown in phantom to emphasize the exhaust assembly 30. The propeller blades 18 can define a circumferential boundary 33 formed by a full rotation of the tips of the blades 18.

The exhaust assembly 30 includes the set of exhaust stubs 32, illustrated as two exhaust stubs 32, which can extend from an inlet 34 to an outlet 36. An exhaust collector 38 defines a first portion (A) of the exhaust and is centered along the centerline 20 fluidly coupling a turbine section 40 having a turbine 42 at the inlet 34. An exhaust stub 32 defines a remaining portion (B) of the exhaust extending from the exhaust collector 38 and terminating in the outlet 36.

A reverse flow portion 44 comprised as part of the exhaust collector 38 includes a turn 46. The turn 46 is at least in part defined by an inner radius IR and an outer radius OR proximate the inlet 34 of the exhaust stub 32. The turn 46 is between the inner radius IR and the outer radius OR where the inner radius IR is smaller than the outer radius OR. The exhaust stub 32 together with the exhaust collector 38 define an exhaust conduit 47. The inner radius IR and outer radius OR are the radii for opposing surfaces within the exhaust conduit 47.

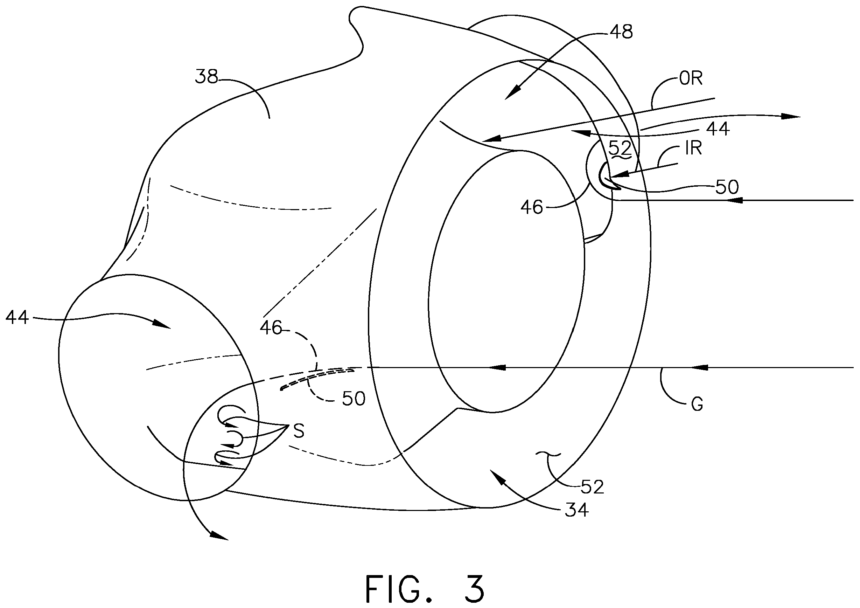

A perspective view of the exhaust collector 38 is illustrated in FIG. 3. For clarity, the exhaust stubs 32 have been removed. An interior 48 of the exhaust is defined at least in part by the exhaust collector 38. At least one vortex generator 50 is provided within the interior 48 on an interior surface 52 at the inner radius IR. While only two vortex generators 50 are illustrated, it is contemplated that multiple vortex generators 50 can be provided along the interior surface 52 on the inner radius IR.

A flow of exhaust gases illustrated by arrows (G) can move from the turbine section (FIG. 2) into the interior 48 through the reverse flow portion 44 by moving around the turn 46 and flowing over the at least one vortex generator 50. It is further contemplated that the turn 46 can include turning vanes (not shown) to further enable the turning of the exhaust gases (G). The vortex generator 50 can help to increase a swirling motion of the flow of exhaust gasses (G) downstream of the turn 46 to produce a vortex (V). The vortices (V) can help to minimize flow separations within the exhaust.

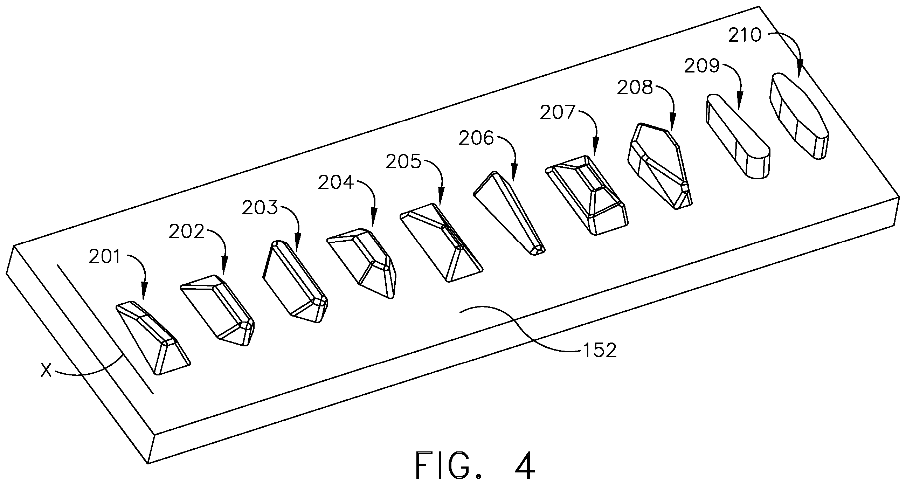

A collection of exemplary non-claimed vortex generators is illustrated in FIG. 4. The cross-sectional shape can be viewed in a plane orthogonal to the body axis (X) of each vortex generator. The planform is the contour of the vortex generator as viewed from above the interior surface 152 as described herein from which the collection of vortex generators projects.

Some non-limiting examples of cross-sectional shapes include rectangular, triangular, and trapezoidal, and may be at least partially defined by the shape of the leading and trailing surfaces of the vortex generator. Some non-limiting examples of shapes for the leading the trailing surfaces include ramped, wedged, or rounded. For example, the leading surfaces of vortex generators 201, 205, 207, 208 are generally ramped; those of vortex generators 202, 203, 204, 206 are generally wedged; and those of vortex generators 209, 210 are generally rounded. The trailing surfaces of vortex generators 201, 202, 204, 205, 206, 207 are generally ramped; those of vortex generators 203, 208 are generally wedged; and those of vortex generators 209, 210 are generally rounded. The ramped, wedged, or rounded surfaces help maintain a high exhaust gas velocity along the interior surface 152 which can reduce the tendency for dust to accumulate on the interior surface 152.

Some non-limiting examples of planforms include rectangular, trapezoidal, diamond-shaped, kite-shaped, teardrop-shaped, ovoid, elliptical, pentagonal, hexagonal, and heptagonal. For example, the vortex generator 201 has a generally trapezoidal planform, the vortex generators 202, 204 have a generally pentagonal planform, the vortex generator 203 has a generally hexagonal planform, the vortex generators 205, 208 have a generally heptagonal planform, the vortex generator 206 has a generally kite-shaped planform, the vortex generator 207 has a generally rectangular planform, the vortex generator 209 has a generally teardrop-shaped planform, and the vortex generator 210 has a generally elliptical planform.

An exemplary vortex generator 206 includes a generally kite-shaped planform with a wedged leading surface and a ramped trailing surface allows for smaller vortices to initiate at the leading surface and grow along the diverging and expanding side walls that intersect the interior surface 152. The kite-shaped planform presents a small initial disturbance to the exhaust gas flow that grows naturally as a vortex on both side walls.

In any of the above exemplary vortex generators, it is understood that while the drawings may show the vortex generators having sharp corners, edges, and/or transitions with the cooling surface for purposes of illustration, it may be more practical for the corners, edges, and/or transitions to be smoothly radiused or filleted. Furthermore, alternative exemplary vortex generators to the vortex generators illustrated as having smoothly radiused or filleted corners, edges, and/or transitions with the cooling surface may instead have sharp corners, edges, and/or transitions.

It should be understood that any of the exemplary vortex generators described herein are non-limiting examples for vortex generator 50. It should be further understood that the vortex generator 50 would be suited for placement along the inner radius IR and would therefore not be formed exactly as illustrated in FIG. 4. Additionally, the vortex generator 50 can be placed anywhere within the exhaust collector 38 or exhaust stubs 32 depending on the geometry, orientation, and flow pattern produced by the exhaust. Any combination of shapes or planforms described herein is also considered.

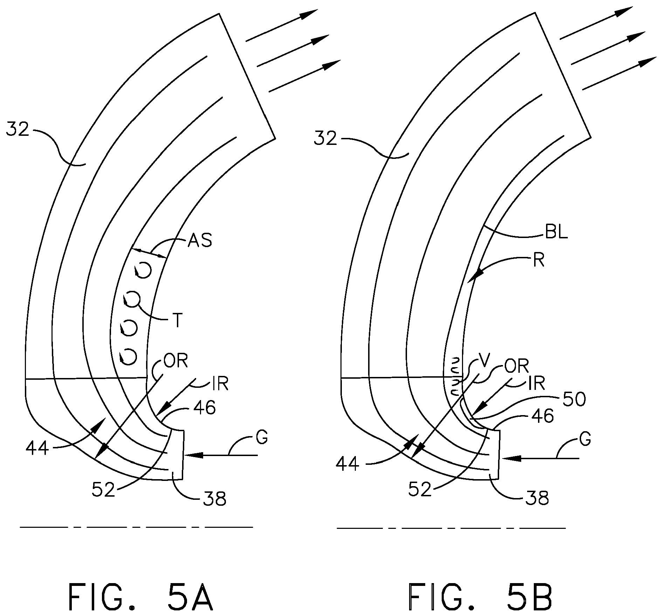

FIG. 5A is a schematic illustration of a top view of a prior art exhaust flow path including the reverse flow portion 44. The exhaust collector 38 is illustrated with no vortex generator 50 and with an airflow separation (AS) that can occur with respect to the interior surface 52. This airflow separation (AS) occurs due to the turn 46 and high speed flow resulting in turbulence (T) through the exhaust collector 38.

FIG. 5B is a schematic illustration of the exhaust flow path described herein with the vortex generator 50. A method of exhausting the combustion gas (G) from the turbine engine 16, includes reversing the flow of combustion gas (G) within the reverse flow portion 44 upon exiting the turbine 42 of the engine 16 and generating the vortex (V) in the flow of combustion gas (G) during the reversing. The non-claimed method can include flowing the combustion gas (G) through the turn 46 in the exhaust stub 32 and flowing the combustion gas (G) over the vortex generator 50 located within the turn 46 to thereby generate the vortex (V). Placing the vortex generator 50 upstream of a region (R) where wasted energy corresponds to flow separation or recirculation will locally energize a boundary layer (BL), reducing separations and pressure loss. Energy can also be wasted by scrubbing interior surface 52 which can lead to the separation. By introducing a vortex generator 50, any low energy or weaker flow in the boundary layer is replaced by more energetic flow from a main stream portion of the combustion gas (G).

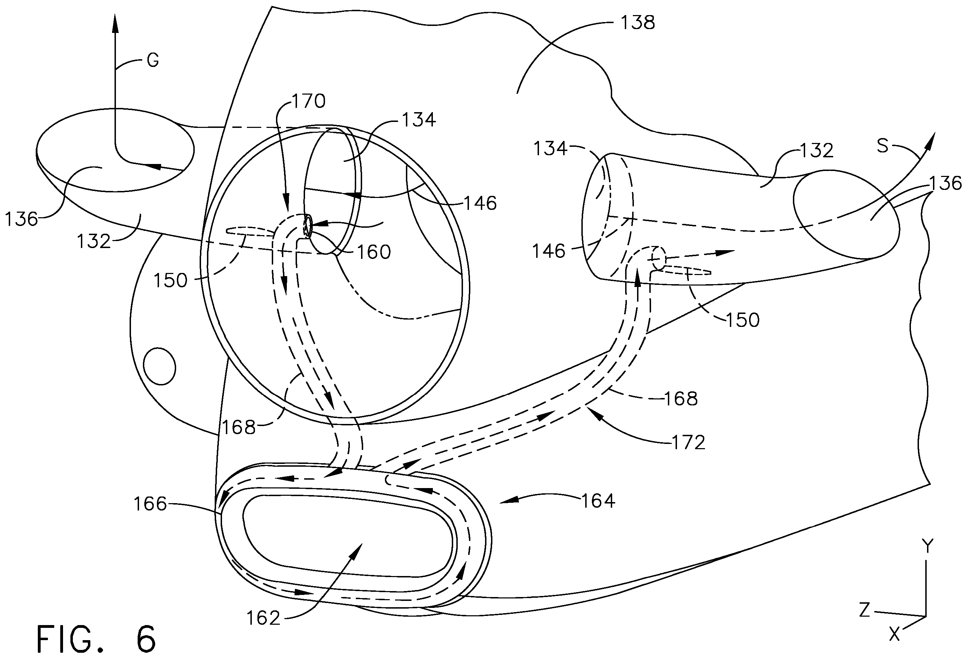

FIG. 6 illustrates a vortex generator 150 according to another aspect of the disclosure described herein. The vortex generator 150 is similar to the vortex generator 50, therefore, like parts will be identified with like numerals increased by 100, with it being understood that the description of the like parts of the first embodiment applies to the second embodiment, unless otherwise noted.

An anti-ice scoop 160 can be integral with, proximate to, or in place of the vortex generator 150. The illustration depicts an anti-ice scoop 160 and a vortex generator 150, however it is contemplated that the anti-ice scoop 160 is formed to be the vortex generator 150. In some aircraft, an engine inlet 162, in which air is received to pass through the engine 16, includes an anti-ice system 164. The anti-ice system 164 can include a conduit 166, coupled to the anti-ice scoop 160, in which hot air is circulated. Small pipes, referred to as snorkels 168, can be placed into exhaust stubs 132 downstream of where the exhaust stub 132 couples to an exhaust collector 138. The snorkels 168 connect the anti-ice scoop 160 to the conduit 166. A flow of combustion gases (G) can flow into at least one of the snorkels 168 via the anti-ice scoop 160 and pass through a delivery pipe 170. The flow of combustion gases (G) can enter the anti-ice scoop 160 due to an orientation of the anti-ice scoop 160 with respect to the flow of combustion gases (G). The combustion gases (G) can then circulate around the inlet 162 through the conduit 166 and exhaust back through a discharge pipe 172 coupled to an exhaust stream (S) for the other of the exhaust stubs 132. Again, the orientation of the anti-ice scoop 160 allows for the combustion gases (G) to discharge into the exhaust stream (S). The method disclosed herein can include scooping a portion of the exhaust gas (G) into the anti-ice scoop 160 and circulating the exhaust gas (G) around the inlet 162.

Installation of vortex generators upstream of the region where flow separation or recirculation can occur will locally energize the boundary layer which reduces separations and pressure losses and therefore improves overall engine performance. An additional benefit is that use of vortex generators can allow for lower radius turns, for example the inner radius (IR) as described herein, resulting in shorter and lighter engines.

In addition, the vortex generators can have integrated anti-ice scoops. The anti-ice scoops can minimize performance loss due to presence of anti-ice snorkels that act as vortex generators, plus the low energy boundary layer can be sucked out of the exhaust to the anti-ice system, further reducing the risk of flow separation.

It should be understood that application of the disclosed design is not limited to turboprop engines, but is applicable to turbine and turboshaft engines as well.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An exhaust assembly (30) for a turbine engine comprising an exhaust conduit comprising a reverse flow portion, said reverse flow portion (44) defining a turn (46) with an interior (48), wherein the reverse flow portion (44) comprises an exhaust stub (32,132) extending from an exhaust collector (38,138) to an exhaust outlet (36,136) defining the exhaust conduit (47) and forming the turn (46,146), **characterized in that** it further comprises snorkels (168) being small pipes, placed into the exhaust stubs (132) downstream of where the exhaust stub (132) couples to the exhaust collector (138), the snorkel (168) connecting an anti-ice scoop (160) to a conduit (166) of the anti-ice system (164).

2. The exhaust assembly of claim 1, wherein the anti-ice scoop (160) is oriented with respect to a flow of combustion gases (G) so that a flow of combustion gases (G) can enter the anti-ice scoop (160).

3. The exhaust assembly of claim 2, wherein the orientation of the anti-ice scoop (160) allows for the combustion gases (G) to discharge into the exhaust stream (S).

4. The exhaust assembly of claim 1 wherein the anti-ice scoop (160) is a vortex generator (150).

5. A turbine engine (16) having a turbine section, a compressor section, and a combustor, **characterized in that** the turbine engine comprises:
an exhaust assembly (30) coupled to the turbine section, and comprising a reverse flow portion, said reverse flow portion (44) defining a turn (46) with an interior (48),
wherein the reverse flow portion (44) comprises an exhaust stub (32,132) extending from an exhaust collector (38,138) to an exhaust outlet (36,136) defining the exhaust conduit (47) and forming the turn (46,146), **characterized in that** it further comprises snorkels (168) being small pipes, placed into the exhaust stubs (132) downstream of where the exhaust stub (132) couples to the exhaust collector (138), the snorkel (168) connecting an anti-ice scoop (160) to a conduit (166) of the anti-ice system (164).

6. The turbine engine of claim 5 wherein the anti-ice scoop (160) is oriented with respect to a flow of combustion gases (G) so that a flow of combustion gases (G) can enter the anti-ice scoop (160).

7. The turbine engine of claim 6 wherein the orientation of the anti-ice scoop (160) allows for the combustion gases (G) to discharge into the exhaust stream (S).

8. The turbine engine of claim 1 wherein the anti-ice scoop (160) is a vortex generator (150).

9. The turbine engine of claim 7, wherein the combustion gases (G) circulate around an engine inlet (162) through the conduit (166) and exhaust back through a discharge pipe (172) coupled to an exhaust stream (S) for the other of the exhaust stubs (132).

10. A method of exhausting combustion gas (G) from a turbine engine defined in claims 5-9, the method comprising:
reversing a flow of combustion gas (G) exiting a turbine (42) of the engine (16); and
scooping a portion of the combustion gas (G) into an anti-ice scoop (160).

11. The method of claim 10 wherein the reversing comprises flowing the combustion gas (G) through a turn (46) in an exhaust conduit (166).

12. The method of claim 10 wherein the method further comprises generating a vortex (V) by flowing the combustion gas (G) over a vortex generator (150) located within the turn (46,146).

13. The method of claim 10 wherein it further comprises circulating the combustion gas (G) around an inlet (162).
